# EUROPÄISCHE PATENTSCHRIFT

(11) **EP 1 957 939 B1**
(45) Veröffentlichungstag und Bekanntmachung des Hinweises auf die Patenterteilung: **23.12.2015**
(21) Anmeldenummer: 06807239.6
(22) Anmeldetag: 13.10.2006
(51) Int. Cl.: G01C 21/36

(54) **VORRICHTUNG UND VERFAHREN ZUR AUSGABE VON ZIELFÜHRUNGSINFORMATIONEN EINES NAVIGATIONSSYSTEMS**
DEVICE AND METHOD FOR OUTPUTTING ROUTING INFORMATION OF A NAVIGATION SYSTEM
DISPOSITIF ET PROCEDE DE FOURNITURE D'INFORMATIONS DE GUIDAGE VERS UNE DESTINATION DANS UN SYSTEME DE NAVIGATION

(30) Priorität: 01.12.2005 DE 102005057263
(43) Veröffentlichungstag der Anmeldung: 20.08.2008
(73) Patentinhaber: ROBERT BOSCH GMBH, 70442 Stuttgart (DE)
(72) Erfinder: JUNG, Thomas, 33613 Bielefeld (DE)
(86) Internationale Anmeldenummer: PCT/EP2006/067375
(87) Internationale Veröffentlichungsnummer: WO 2007/062899

(56) Entgegenhaltungen:
- EP-A1- 0 588 086
- DE-A1- 10 307 591
- JP-A- 2004 184 136
- JP-A- 2004 317 275
- US-A1- 2002 120 455

## Beschreibung

### Technisches Gebiet

Die Erfindung betrifft ein Navigationssystem mit einer Ortungseinheit, einer Datenbasis, einer Routenberechnungseinheit, einer Eingabevorrichtung, einer Ausgabevorrichtung zur Zielführung und einer Bewertungseinheit zur Ermittlung der Notwendigkeit der Ausgabe einer Zielführungsinformation, wobei die Ausgabe einer Zielführungsinformation innerhalb eines insbesondere einstellbaren Radius um einen Zielpunkt herum unterdrückbar ist, sowie ein Verfahren zur Ausgabe von Zielführungsinformationen.

### Stand der Technik

Besonders bei höherwertig ausgestatteten Kraftfahrzeugen finden Navigationssysteme bzw. Fahrerinformationssysteme zunehmend Verbreitung. Mit einem Navigationssystem ist es möglich, auch unbekannte Orte oder Straßen in fremden Städten ohne die Gefahr des Verfahrens leicht aufzufinden. Hierzu besteht ein Navigationssystem im Wesentlichen aus einer Ortungseinheit, die mit Hilfe des GPS-oder zukünftig des Galileosystems die Position des Navigationssystems bzw. des damit ausgestatteten Kraftfahrzeugs auf der Erdoberfläche mit hinreichender Genauigkeit feststellen kann. Des Weiteren verfügt das Navigationssystem über eine Datenbasis, die beispielsweise auf einer austauschbaren CD-ROM gespeichert ist, in der alle fahrtrelevanten Informationen bezüglich des Straßennetzes des aktuell befahrenen Gebiets gespeichert sind. Weiterhin können hier zusätzliche Informationen wie die Position von Hotels, Raststätten, Sehenswürdigkeiten oder dergleichen abgespeichert sein. Über eine Eingabevorrichtung kann der Nutzer des Navigationssystems den gewünschten Zielort eingeben, wobei von dem Navigationssystem bzw. von dessen Routenberechnungseinheit eine Fahrtstrecke vom Ausgangspunkt zu dem gewünschten Zielort errechnet wird. Hierbei können auch fahrzeugspezifische oder nutzerspezifische Parameter wie beispielsweise der Ausschluss von Mautstrecken berücksichtigt werden. Zur Zielführung des Nutzers werden von einer Ausgabevorrichtung optische und/oder akustische Zielführungsinformationen ausgegeben, unter anderem in Form einer Sprachmitteilung oder als Richtungspfeil auf einem Display des Navigationssystems.

Weiterhin ist es bekannt, dass in Navigationssystemen eine Heimatadresse bzw. ein häufig angefahrener Zielpunkt wie beispielsweise ein Firmenstandort eingegeben werden kann, um ein umständliches Neuprogrammieren dieses häufig angefahrenen Zielpunktes zu vermeiden.

Aus der Druckschrift DE 103 07 591 A1 sind eine Navigationsvorrichtung und ein Navigationsverfahren zum Suchen einer Route von einem Abfahrtsort zu einem Bestimmungsort bekannt. Die Navigationsvorrichtung enthält eine Benachrichtigungseinheit zum Benachrichtigen von Benutzern in einem Fall, in welchem eine Routensucheinheit eine Routensuche für einen Bereich in der Nähe eines Bestimmungsortes nicht durchführen kann, darüber, dass die Routensuchvorrichtung die Routensuche für den Bereich in der Nähe des Bestimmungsortes nicht durchführen kann, wenn eine physikalische Größe, die mit einer Beziehung zwischen der gegenwärtigen Position eines Fahrzeugs, die durch eine Bestimmungseinheit für die gegenwärtige Position bestimmt wurde, und dem Bestimmungsort assoziiert ist, geringer als ein voreingestellter Bezugswert ist. Die bekannte Navigationsvorrichtung und das bekannte Navigationsverfahren sind in der Lage, Benutzer sicher zu benachrichtigen, dass die Routensuche nicht für einen Bereich in der Nähe eines Bestimmungsortes durchgeführt werden kann. Dadurch erkennen Benutzer den Umstand, dass die Routenführung angehalten wird, bevor ein Fahrzeug, das die Navigationsvorrichtung oder das Navigationsverfahren benutzt, den Bestimmungsort erreicht.

Zu diesem Zweck enthalten in einer Speichereinheit gespeicherte Kartendaten Informationen darüber, ob die Routensuche durchgeführt werden kann oder nicht, als ein Attribut für jeweilige Straßendaten. Die jeweiligen Straßendaten sind gespeichert als ein Satz von "Knoten" und "Verbindungen", welche Informationsstücke sind, die zum Bilden von Straßennetzwerkdaten verwendet werden, während sie mit verschiedenen Attributdaten assoziiert sind. Wenn eine Straße mit einem Attribut vorhanden ist, das zeigt, dass die Routensuche nicht in der Nähe des Bestimmungsortes oder des Durchgangspunktes durchgeführt werden kann (z. B. eine Straße mit einer Zone, deren Durchfahrt für gewöhnliche Fahrzeuge untersagt ist oder die eine Privatstraße ist), oder wenn keine Straße in der Nähe des Bestimmungsortes oder des Durchgangspunktes vorhanden ist, besteht die Möglichkeit, dass die Routensuche nicht für einen Bereich in der Nähe des Bestimmungsortes oder des Durchgangspunktes durchgeführt werden kann. Dann kann eine Steuereinheit Benutzer über diesen Umstand benachrichtigen.

Gemäß einem in der Druckschrift DE 103 07 591 A1 konkret erläuterten Beispiel, in dem ein Bestimmungsort und ein Durchgangspunkt gesetzt werden, sucht die Steuereinheit eine optimale Route von einem Abfahrtsort über den Durchgangspunkt zu dem Bestimmungsort durch Bezugnahme auf die in der Speichereinheit gespeicherten Kartendaten. Die Steuereinheit bestimmt dann die gegenwärtige Position des Fahrzeugs auf der Grundlage empfangener GPS-Signale.

Weiterhin berechnet die Steuereinheit den Abstand von der gegenwärtigen Position des Fahrzeugs zu dem Bestimmungsort, wenn die gegenwärtige Position des Fahrzeugs bestimmt wird, und sie vergleicht dann den Abstand von der gegenwärtigen Position des Fahrzeugs zu dem Bestimmungsort mit einem voreingestellten Bezugsabstand. Wenn sich das Fahrzeug dem Bestimmungsort nähert und der Abstand von der gegenwärtigen Position des Fahrzeugs zu dem Bestimmungsort kürzer als der voreingestellte Bezugsabstand wird, benachrichtigt die Steuereinheit die Benutzer über den Umstand, dass die Steuereinheit die Routensuche für einen Bereich in der Nähe des Bestimmungsortes nicht durchführen kann.

Die Benutzer können den voreingestellten Bezugsabstand ändern. Eine Änderung des voreingestellten Bezugsabstands kann von der Steuereinheit z.B. unter der Bedingung akzeptiert werden, dass sowohl die gegenwärtige Position als auch der Bestimmungsort nicht zur selben Zeit auf einem Schirm einer Anzeigevorrichtung dargestellt werden, der voreingestellte Bezugsabstand also eine Mindestgröße aufweisen muss, um den Benutzern bei Annäherung an den Bestimmungsort genügend Zeit für eine Routenentscheidung über den Bereich in der Nähe des Bestimmungsortes freizuhalten.

Aus der Druckschrift JP 2004 317 275 A ist ein Fahrzeugnavigationssystem bekannt, welches die Aufgabe hat, eine für einen Benutzer unnötige Erzeugung einer Zielführung zu unterdrücken. Zur Lösung dieser Aufgabe wird, wenn durch eine Routenführung ursprünglich eine Leitroute zu einem Ziel festgelegt ist, im Falle eines versehentlichen Abbiegens an einer bestimmten Stelle z.B. nach links in eine fremde Straße eine andere Route - ausgehend von der Position nach dem beispielsweisen Linksabbiegen - festgelegt und wird eine Sprachführung vorgenommen, die die Abweichung von der ursprünglichen Leitroute ankündigt. Anschließend werden ein Zielführungsbild für einen Kreuzungspunkt oder eine Zielführung zum Links- oder Rechtsabbiegen an diesem Kreuzungspunkt angezeigt. Alternativ wird im Falle eines beispielsweisen Rechtsabbiegens an einem anderen Punkt zu dem Zweck, über eine im Voraus für das Ziel registrierte Route an einem Supermarkt zu halten, eine die Abweichung von der Leitroute ankündigende Sprachführung nicht vorgenommen, oder es wird anschließend kein Zielführungsbild für den Kreuzungspunkt oder keine Zielführung zum Links- oder Rechtsabbiegen an diesem Kreuzungspunkt angezeigt.

Aus der Druckschrift EP 0 588 086 A1 ist ein Routenführungssystem mit Sprachausgabe für Fahrzeuge bekannt. Bei einem Routenführungssystem wird, wenn das Fahrzeug den Zielort erreicht, dies dem Fahrer hörbar angekündigt und wird die Routenführung beendet. Wird jedoch die aktuelle Position des Fahrzeugs mit verringerter Genauigkeit gemessen, kann die tatsächliche Ankunft am Zielort vom Zielführungssystem dagegen nicht erkannt werden. Daher kann es vorkommen, dass das Zielführungssystem die Zielführung nicht abschließt.

Wird die Messung mit geringer Genauigkeit durchgeführt und ferner eine Route von einem Anfangspunkt zu einem Zielort über einen (weiteren) Punkt, im Folgenden als "Transitpunkt" bezeichnet, gewählt, kann auch die folgende Schwierigkeit auftreten. Wird eine derartige Route im Zielführungssystem festgelegt, wird der Transitpunkt zunächst als ein erster Zielort gesucht und daraufhin eine erste Route vom Anfangspunkt zum Transitpunkt bestimmt. Nachfolgend wird eine zweite Route vom Transitpunkt zum endgültigen Zielort gesucht und bestimmt. Falls die Ankunft am ersten Zielort nicht bestimmt ist, kann die Zielführung entlang der zweiten Route nicht eingeleitet werden. Insbesondere kann die Ankunft am Transitpunkt nicht erkannt werden, falls die Messgenauigkeit gering ist oder das Fahrzeug einen geringfügig vom Transitpunkt beabstandeten Punkt passiert hat, so dass die Zielführung entlang der ersten Route nicht beendet wird. Daher wird die Zielführung zum endgültigen Zielort nicht eingeleitet.

Das aus der Druckschrift EP 0 588 086 A1 bekannte Routenführungssystem ist nun dafür eingerichtet, bei Eintreffen des Fahrzeugs am Zielort selbst dann seine Routenführung zu beenden, wenn die aktuelle Position des Fahrzeugs mit nur geringer Genauigkeit gemessen wird. Dazu ist eine Annäherungs-Bewertungseinheit vorgesehen, die entscheidet, dass das Fahrzeug sich einem Punkt nähert, der vom Zielort um eine vorbestimmte Entfernung beabstandet ist. Eine Zielführungs-Beendigungs-Bewertungseinheit entscheidet ferner, ob es zwischen der aktuellen Fahrzeugposition und dem Zielort einen Punkt gibt, an dem die Zielführung durchgeführt werden sollte, oder nicht. Auf der Grundlage dieser Entscheidungen erkennt das System, dass sich das Fahrzeug dem Punkt nähert, der vom Zielort um den vorgegebenen Abstand entfernt ist, und ferner, dass die Zielführung insgesamt beendet ist. Daraufhin beendet eine Beendigungseinheit 48 die Zielführung.

Aus der Druckschrift US 2002/0 120 455 A1 sind ein Verfahren und eine Vorrichtung zur Spracheingabe-Führung bekannt, wobei eine Schalterbetätigungs-Detektionseinheit zum Detektieren einer Betätigung eines Schalters, eines Drehgebers, oder eines Berührungsfeldes, und eine Zeigerbetätigungs-Detektionseinheit zum Detektieren einer Bewegung eines Zeigers zum Anzeigen eines auf einer Anzeigeeinrichtung dargestellten Auswahlpunktes eine Spracheingabe-Führungs-Zentralsteuereinheit mit Signalen beliefern. Die Spracheingabe-Führungs-Zentralsteuereinheit liest Daten von einer Spracheingabe-Führungs-Datensammeleinheit zum Sammeln und Aufzeichnen von Spracheingabe-Befehlen , die einzelnen Arbeitsschritten zugeordnet sind, eine Spracheingabe-Führungs-Ausgabezählung, und eine Spracheingabe-Ausführungszählung, und sieht eine Spracheingabe-Führung durch Sprache oder als Bild vor. Falls in diesem Zustand detektiert wird, dass ein Audiogerät in Betrieb ist, überschreiten die Spracheingabe-Führungs-Ausgabezählung oder die Spracheingabe-Ausführungszählung einen vorgegebenen Zählerstand, und entweder die Sprachführung oder die Bildanzeigeführung oder beide werden unterbrochen. Für den Betrieb einer mit dieser Vorrichtung zur Spracheingabe-Führung verbundenen Navigationseinrichtung bedeutet dies insbesondere, dass die Spracheingabe-Führung unterbrochen wird, während die Navigationseinrichtung einen Benutzer mit wichtiger Zielführungsinformation versorgt, und eine Bildschirmanzeige für die Spracheingabe-Führung unterbrochen wird, wenn ein Bild für eine Straßenkreuzungs-Zielführung angezeigt wird.

Die Zielführungsinformationen werden von dem Navigationssystem in Abhängigkeit der Fahrtstrecke ausgeben, so dass beispielsweise im Stadtverkehr vor und an jeder Kreuzung die einzuschlagende Richtung vorgegeben wird. Bei längeren Autobahn- oder Überlandfahrten erfolgt in der Regel nur eine einmalige Anweisung, z.B. in der Form, dass dem Straßenverlauf für lange Zeit gefolgt werden solle.

Als nachteilig hierbei ist anzusehen, dass insbesondere in der Umgebung seiner Heimatadresse ein Nutzer des Navigationssystems üblicherweise über so viel Ortskenntnis verfügt, dass die Ausgabe von Zielführungsinformationen nicht mehr notwendig ist oder sogar als unkomfortabel erachtet wird.

Ausgehend von diesem Stand der Technik liegt der Erfindung die Aufgabe zugrunde ein Navigationssystem zu schaffen, dessen Nutzungskomfort erhöht ist und das zur Erhöhung der Verkehrssicherheit beiträgt. Des Weiteren soll ein entsprechendes Verfahren zur Ausgabe von Zielführungsinformationen geschaffen werden.

Diese Aufgaben werden durch die Merkmale der Ansprüche 1 oder 4 gelöst.

Der Kerngedanke der Erfindung besteht darin, dass ein an sich bekanntes Navigationssystem über eine zusätzliche Bewertungseinheit verfügt, mit der eine Notwendigkeit zur Ausgabe einer Zielführungsinformation ermittelbar ist. Wird von dieser Bewertungseinheit festgestellt, dass die Ausgabe von Zielführungsinformationen nicht notwendig ist, so werden diese nicht ausgegeben, um den Nutzer des Navigationssystems nicht mit einer überflüssigen Informationsflut vom Verkehrsgeschehen abzulenken. Das bedeutet, dass beispielsweise in unmittelbarer Umgebung des Wohnorts des Nutzers keine Zielführungsinformationen mehr ausgegeben werden, da sich der Nutzer hier im Normalfall über die gewünschte Fahrtroute im Klaren ist.

Im Rahmen der Erfindung können unterschiedliche Bewertungskriterien zur Beurteilung, ob eine Zielführungsinformation ausgegeben werden soll oder nicht, herangezogen werden, bevorzugt jedoch die im Folgenden beschriebenen.

Der Vorteil der Erfindung besteht darin, dass durch die differenzierte Ausgabe von Zielführungsinformationen das Navigationssystem den Erfordernissen eines Nutzers anpassbar ist, so dass die Nutzung subjektiv als komfortabler erachtet wird. Zudem wird der Nutzer in unmittelbarer Umgebung eines ihm bekannten Ortes nicht mehr durch unnötige Informationen abgelenkt und somit die Verkehrssicherheit erhöht.

Wie vorteilhaft in den Ansprüchen 1 und 4 angegeben ist, werden innerhalb eines Radius um den gewählten Zielort herum keine Zielführungsinformationen mehr ausgegeben. Hierzu wird die aktuelle Position mit der tatsächlichen Entfernung vom Zielpunkt, den der Nutzer vorher eingegeben hat, verglichen und anhand des horizontalen Abstandes bestimmt, ob der Radius, innerhalb dessen keine Zielführungsinformationen mehr ausgegeben werden sollen, bereits unterschritten ist. In bevorzugter Weise kann dieser Radius vom Nutzer auch auf seine individuellen Bedürfnisse angepasst werden. Beispielsweise kann der Nutzer als Zielpunkt seine Heimatadresse eingeben und als Radius eine Entfernung von 10km, so dass er bei einer Annäherung an seine Heimatadresse unter diesen Radius keine Zielführungsinformationen mehr erhält, da er sich in diesem Gebiet auskennen sollte.

An dieser Stelle sei erwähnt, dass aus der Druckschrift JP 2004 184 136 A ein Navigationssystem sowie ein Programm zu dessen Betrieb bekannt sind, die die Aufgabe haben, eine vom Navigationsgerät vorgenommene Zielführung eines Nutzers innerhalb eines Zielführungs-Verhinderungsbereichs einzuschränken. Dazu ist das Navigationssystem mit Mitteln zum Bestimmen einer aktuellen Position, mit Informationsmitteln zum Informieren des Nutzers mit Zielführungsinformation, mit Mitteln zum Festlegen des Zielführungs-Verhinderungsbereichs und mit Steuerungsmitteln ausgestattet. Die Steuerungsmittel bestimmen auf der Grundlage von Informationen, die von den Mitteln zum Bestimmen der aktuellen Position ermittelt wurden, ob ein zu der aktuellen Position gehörender Ort sich in einem festgelegten Zielführungs-Verhinderungsbereich befindet, und geben nur bestimmte Zielführungsinformationen an die Informationsmittel aus, wenn sich das Navigationssystem innerhalb des Zielführungs-Verhinderungsbereichs befindet.

Zur Anpassung an unterschiedliche Gegebenheiten ist in den Ansprüchen 1 und 4 vorgeschlagen, dass ausgehend von dem eingegebenen Zielpunkt und der aktuellen Entfernung davon die Zielführungsinformationen mit einem vorzugsweise ebenfalls einstellbaren Gradienten bei der Annäherung zum Zielpunkt hin weniger häufig ausgegeben werden. Beispielsweise könnte bei einer Entfernung von 20km vom Zielpunkt noch die volle Anzahl an Zielführungsinformationen ausgegeben werden, bei 10km Entfernung nur noch die Hälfte, beispielsweise nur noch grobe Richtungsangaben, und bei Erreichen des Zielpunkts keine Zielführungsinformationen mehr. Es ist für den Fachmann ersichtlich, dass dieser Gradient nicht linear verlaufen muss sondern u.a. stufenweise eine Verringerung der Anzahl der ausgegebenen Zielführungsinformationen erfolgen kann.

Vorteilhafte Ausgestaltungen der Erfindung sind jeweils in den Unteransprüchen gekennzeichnet.

In den Ansprüchen 2 und 5 ist gekennzeichnet, dass vom Nutzer auch mehrere Zielpunkte eingegeben werden können, die von ihm häufig angefahren werden, beispielsweise seine Heimat- und seine Firmenadresse, gegebenenfalls mit jeweils unterschiedlichen Radien, so dass er bei der Annäherung an diese Zielpunkte jeweils nicht mit überflüssigen Informationen belästigt wird.

Gemäß der in den Ansprüchen 3 und 6 vorgeschlagenen Ausführungsform kann ein Nutzer das Navigationssystem an seine Bedürfnisse anpassen in dem er die Anzahl der vom Navigationssystem ausgegebenen Zielführungsinformationen selbst bestimmt. Somit kann er die Zahl der auf ihn einströmenden Informationen reduzieren, wenn er beispielsweise während einer Autobahnfahrt lediglich eine grobe Richtungsangabe braucht, um zu seinem gewünschten Zielpunkt zu gelangen. Benötigt er jedoch in einer fremden Stadt häufigere Zielführungsinformationen kann er dies wiederum veranlassen.

Es versteht sich, dass das Ausgeben von Zielführungsinformationen bei Annäherung an einen bekannten Zielpunkt auf Wunsch des Nutzers auch weiterhin erfolgen kann, d.h. dass das Ausgeben nicht unterdrückt wird.

### Kurzbeschreibung der Zeichnung

Ein Ausführungsbeispiel der Erfindung wird nachstehend anhand einer Zeichnung näher erläutert. Es zeigt:

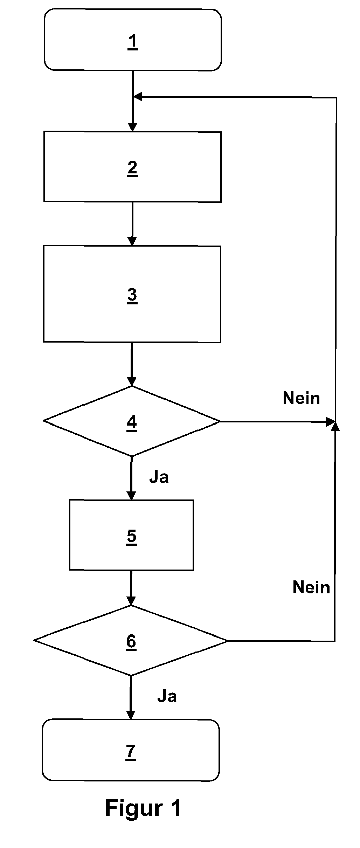

Figur 1 ein schematisches Flussdiagram der Funktionsweise des Navigationssystems.

### Bester Weg zur Ausführung der Erfindung

Aus der schematischen Darstellung in Figur 1 ist der grundsätzliche Ablauf der Zielführung eines Navigationssystems ersichtlich. In Schritt 1 erfolgt der Start der Zielführung. Von einer an sich bekannten Routenberechnungseinheit wird gegebenenfalls anhand vom Nutzer gewünschter Kriterien eine Fahrtroute von der in Schritt 2 aktuell ermittelten Position, die mit einer Ortungseinheit festgestellt wird, zu dem vom Nutzer über eine Eingabevorrichtung gewählten Zielpunkt anhand der in der Datenbasis vorhandenen Streckeninformationen berechnet. Die entsprechenden Zielführungsinformationen werden über optische und/oder akustische Ausgabevorrichtungen dem Nutzer mitgeteilt.

Zusätzlich ist eine Bewertungseinheit vorgesehen, die in einem Schritt 3 überprüft, ob eine Zielführungsinformation ausgegeben werden soll oder nicht. In Schritt 4 wird entschieden, ob die Anweisung ausgegeben wird oder nicht und folglich eine Anweisung ausgearbeitet, beispielsweise dass "dem Straßenverlauf gefolgt werden solle". Diese Anweisung wird dann in Schritt 5 ausgegeben. Beispielsweise kann das Ausgeben einer Zielführungsinformation bei Unterschreiten eines Radius von 10km zu dem gewünschten Zielpunkt, beispielsweise der Heimatadresse des Nutzers, unterdrückt werden, da in diesem Bereich um den Zielpunkt herum der Nutzer keine Zielführungsinformationen mehr benötigt.

Ist das Ziel erreicht, was in Schritt 6 durch die Ortungseinheit im Vergleich mit einem vorgegebenen Fahrtziel ermittelt werden kann, kann dies mit einer Schlussmitteilung des Navigationssystems bestätigt werden, wobei diese letzte Zielführungsinformation ebenfalls unterdrückt werden kann. Nachfolgend wird die Zielführung durch das Navigationssystem in Schritt 7 beendet.

## Patentansprüche

1. Navigationssystem mit einer Ortungseinheit, einer Datenbasis, einer Routenberechnungseinheit, einer Eingabevorrichtung, einer Ausgabevorrichtung zur Zielführung und einer Bewertungseinheit zur Ermittlung der Notwendigkeit der Ausgabe einer Zielführungsinformation, wobei die Ausgabe einer Zielführungsinformation innerhalb eines insbesondere einstellbaren Radius um einen Zielpunkt herum unterdrückbar ist, **dadurch gekennzeichnet, dass** die weitere Anzahl der ausgegebenen Zielführungsinformationen bei Annäherung an den Zielpunkt mit einem insbesondere einstellbaren Gradienten abnimmt.

2. Navigationssystem nach Anspruch 1, **dadurch gekennzeichnet, dass** verschiedene Zielpunkte eingebbar sind.

3. Navigationssystem nach einem der Ansprüche 1 bis 2, **dadurch gekennzeichnet, dass** die Anzahl der insgesamt ausgegebenen Zielführungsinformationen einstellbar ist.

4. Verfahren zur Ausgabe von Zielführungsinformationen bei einem Navigationssystem, in dem die Zielführungsinformationen daraufhin bewertet werden, ob deren Ausgabe notwendig ist, wobei die Ausgabe von Zielführungsinformationen innerhalb eines insbesondere einstellbaren Radius um einen Zielpunkt herum unterdrückt wird,
**dadurch gekennzeichnet, dass** bei Annäherung an den Zielpunkt die weitere Anzahl an ausgegebenen Zielführungsinformationen mit einem insbesondere einstellbaren Gradienten abnimmt.

5. Verfahren nach Anspruch 4, **dadurch gekennzeichnet, dass** verschiedene Zielpunkt ausgewählt werden.

6. Verfahren nach einem der Ansprüche 4 bis 5, **dadurch gekennzeichnet, dass** die Anzahl der ausgegebenen Zielführungsinformationen bestimmt wird.

## Claims

1. Navigation system having a locating unit, a database, a route computation unit, an input apparatus, an output apparatus for routing and a rating unit for ascertaining the need for the output of a piece of routing information, wherein the output of a piece of routing information can be suppressed within an, in particular, adjustable radius around a destination, **characterized in that** the further number of output pieces of routing information decreases with an, in particular, adjustable gradient as the destination is approached.

2. Navigation system according to Claim 1, **characterized in that** various destinations can be input.

3. Navigation system according to either of Claims 1 and 2, **characterized in that** the number of pieces of routing information that are output in total is adjustable.

4. Method for outputting pieces of routing information in a navigation system in which the pieces of routing information are rated for whether they need to be output, wherein the output of pieces of routing information is suppressed within an, in particular, adjustable radius around a destination,
**characterized in that** the further number of pieces of output routing information decreases with an, in particular, adjustable gradient as the destination is approached.

5. Method according to Claim 4, **characterized in that** various destinations are selected.

6. Method according to either of Claims 4 and 5, **characterized in that** the number of pieces of output routing information is determined.

## Revendications

1. Système de navigation comprenant une unité de localisation, une base de données, une unité de calcul de route, un dispositif de saisie, un dispositif de fourniture pour le guidage et une unité d'analyse pour déterminer la nécessité de fournir une information de guidage, la fourniture d'une information de guidage pouvant être supprimée dans un rayon notamment ajustable à l'entour d'un point cible, **caractérisé en ce que** le nombre supplémentaire d'informations de guidage fournies diminue avec un gradient notamment ajustable au fur et à mesure de l'approche du point cible.

2. Système de navigation selon la revendication 1, **caractérisé en ce que** différents points cibles peuvent être saisis.

3. Système de navigation selon la revendication 1 ou 2, **caractérisé en ce que** le nombre des informations de guidage fournies dans l'ensemble peut être ajusté.

4. Procédé de fourniture d'informations de guidage dans un système de navigation, dans lequel les informations de guidage sont analysées pour déterminer si leur fourniture est nécessaire, la fourniture d'informations de guidage étant supprimée dans un rayon notamment ajustable à l'entour d'un point cible, **caractérisé en ce que** le nombre supplémentaire d'informations de guidage fournies diminue avec un gradient notamment ajustable au fur et à mesure de l'approche du point cible.

5. Procédé selon la revendication 4, **caractérisé en ce que** différents points cibles sont sélectionnés.

6. Procédé selon l'une quelconque des revendications 4 à 5, **caractérisé en ce que** le nombre des informations de guidage fournies est défini.
